# EUROPEAN PATENT APPLICATION

(11) **EP 3 255 425 A1**
(43) Date of publication of application: **13.12.2017**
(21) Application number: 16173865.3
(22) Date of filing: 10.06.2016
(51) Int. Cl.: G01N 29/07, G01N 29/38, G01F 23/296, G04F 10/00, G04F 13/02

(54) **ACOUSTIC CONTROLLER**

(71) Applicant: NXP B.V., 5656 AG Eindhoven (NL)
(72) Inventor: MACOURS, Christophe Marc, 5656 AG Eindhoven (NL)
(74) Representative: Miles, John Richard

(57) **Abstract**

An acoustic controller is described including a detector configured to detect a received reference signal on the terminals of a second acoustic transducer transmitted by a first acoustic transducer, the first and second acoustic transducers having a voice coil; and a processor coupled to the signal generator and the detector, wherein the processor is configured to determine a magnetic-coupling-delay value from the detected reference signal, determine an acoustic-coupling-delay value from the detected reference signal; and determine a time-of-flight value of an acoustic signal transmitted between the first acoustic transducer and the second acoustic transducer from the acoustic-coupling-delay value and the magnetic-coupling-delay value.

## Description

### FIELD

This disclosure relates to an acoustic controller for determining the time of flight of an acoustic signal.

### BACKGROUND

Multi-channel audio reproduction such as 5.1 surround sound is currently limited to stationary home installations due to the multiplicity of loudspeakers. Mobile devices, and especially smartphones, have increasing audio reproduction capabilities. It may be desirable to enable simultaneous multi-device sound reproduction to further enhance listening experience in case multiple devices are located near each other. Knowing the distance separating the loudspeakers with a sufficiently high accuracy, typically less than 1cm, is required in order to guarantee an accurate control of the sound field generated by the multiple speakers across multiple devices. Techniques exist for calculating device-to-device distance. RF-based solutions for example are based on power level differences and suffer from a poor localization accuracy having an order of magnitude of 1 metre.

### SUMMARY

Various aspects of the disclosure are defined in the accompanying claims. In a first aspect there is defined an acoustic controller comprising a detector configured to detect a received reference signal on the terminals of a second acoustic transducer transmitted by a first acoustic transducer, the first and second acoustic transducers having a voice coil; a processor coupled to the signal generator and the detector, wherein the processor is configured to determine a magnetic-coupling-delay value from the detected reference signal, determine an acoustic-coupling-delay value from the detected reference signal, and determine a time-of-flight value of an acoustic signal transmitted between the first acoustic transducer and the second acoustic transducer from the acoustic-coupling-delay value and the magnetic-coupling-delay value.

In one or more embodiments, the acoustic controller may comprise a reference signal generator coupled to the processor wherein the processor is further configured to compare the detected signal with the generated reference signal.

In one or more embodiments of the acoustic controller, the detector may be configured to detect a magnetic coupling signal component of the detected reference signal due to the magnetic coupling between the first acoustic transducer and the second acoustic transducer, and the processor may be configured to determine a magnetic-coupling-delay value from the magnetic coupling signal component.

In one or more embodiments of the acoustic controller, the detector may be configured to detect an acoustic coupling signal component of the detected reference signal due to the acoustic coupling between the first acoustic transducer and the second acoustic transducer and the processor may be further configured to determine the acoustic-coupling-delay value from the acoustic coupling signal component.

In one or more embodiments of the acoustic controller, the processor may be further configured to determine the time-of-flight value from the difference between the acoustic coupling delay value and the magnetic coupling delay value.

In one or more embodiments of the acoustic controller, the signal generator may be further configured to generate a further signal for transmission by the second acoustic transducer, the detector is further configured to detect a further signal on the terminals of the first acoustic transducer transmitted by the second acoustic transducer and the processor may be further configured to determine a further magnetic-coupling-delay value dependent on the detected signal, determine a further acoustic-coupling-delay value dependent on the detected signal; and determine the time-of-flight value of an acoustic signal transmitted between the second acoustic transducer and the first acoustic transducer from the acoustic-coupling-delay value, the further acoustic-coupling-delay value, the magnetic-coupling-delay value and the further magnetic-coupling-delay value.

In one or more embodiments of the acoustic controller, the processor may be further configured to determine the time-of-flight value from the difference between the average of the acoustic-coupling-delay value and the further acoustic-coupling-delay value and the average of the magnetic-coupling-delay value and the further magnetic-coupling-delay value.

In one or more embodiments the acoustic controller may further comprise a memory coupled to the processor, wherein the memory is configured to store the determined magnetic coupling delay value and the processor is further configured to determine further time-of-flight values from the acoustic coupling delay value and the stored magnetic coupling delay value.

An audio system may include the acoustic controller coupled to the first and second acoustic transducers. The acoustic transducers may comprise one of a loudspeaker, an electrodynamic microphone and a linear resonant actuator.

In a second aspect there is defined a method for determining a distance between two acoustic transducers, each of the acoustic transducers comprising a voice coil, the method comprising detecting a reference signal via a second acoustic transducer transmitted from the first transducer, determining a magnetic coupling delay value dependent on the detected signal and the generated signal, determining an acoustic coupling delay value dependent on the detected signal and the generated signal; and determining a time-of-flight value of an acoustic signal transmitted between the first acoustic transducer and the second acoustic transducer from the acoustic coupling delay value and the magnetic coupling delay value.

In one or more embodiments, determining a distance between the first acoustic transducer and the second acoustic transducer may further comprise determining the difference between the acoustic coupling delay value and the magnetic coupling delay value.

In one or more embodiments, determining the magnetic coupling delay value may further comprise detecting a magnetic-coupling-signal component of the signal due to the magnetic coupling between the first acoustic transducer and the second acoustic transducer.

In one or more embodiments, determining the acoustic coupling delay value may further comprise detecting an acoustic-coupling-signal component of the signal due to the acoustic coupling between the first acoustic transducer and the second acoustic transducer.

In one or more embodiments, the method may further comprise generating a further signal, transmitting the further signal via the second acoustic transducer, detecting the further transmitted signal via the first acoustic transducer, determining a further magnetic coupling delay value dependent on the further detected signal and the further generated signal, determining a further acoustic coupling delay value dependent on the detected signal and the generated signal; and determining a time-of-flight value of an acoustic signal transmitted between the second acoustic transducer and the first acoustic transducer from the acoustic coupling delay value, the further acoustic coupling delay value, the magnetic coupling delay value, and the further magnetic coupling delay value.

In one or more embodiments, the method may further comprise arranging the first acoustic transducer and the second acoustic transducer at a first distance such that the first acoustic transducer and the second acoustic transducer are at least magnetically coupled in operation, determining the magnetic coupling delay value, arranging the first acoustic transducer and the second acoustic transducer at a second distance such that the speaker and the second speaker are at least acoustically coupled in operation, determining the acoustic coupling delay value, wherein determining the distance comprises determining the second distance from the acoustic coupling delay value and the magnetic coupling delay value.

In a third aspect there is described a computer program product comprising instructions which, when being executed by a processing unit, cause said processing unit to perform the steps of detecting a reference signal via a second acoustic transducer, transmitted from a first transducer, determining a magnetic coupling delay value dependent on the detected signal and the generated signal, determining an acoustic coupling delay value dependent on the detected signal and the generated signal; and determining a time-of-flight value of an acoustic signal transmitted between the first acoustic transducer and the second acoustic transducer from the acoustic coupling delay value and the magnetic coupling delay value.

In the figures and description like reference numerals refer to like features. Embodiments of the invention are now described in detail, by way of example only, illustrated by the accompanying drawings in which:
Figure 1 shows a typical arrangement for determining the separation of two loudspeakers.
Figure 2 illustrates an acoustic controller according to an embodiment.
Figure 3 Shows a) a loudspeaker showing the ac magnetic field produced b) two mutually coupled loudspeakers c) two loudspeakers acoustically and magnetically coupled.
Figure 4 illustrates an acoustic controller according to an embodiment connected to two acoustic transducers having voice coils.
Figure 5 illustrates an acoustic controller according to an embodiment connected to two acoustic transducers having voice coils.
Figure 6 shows an acoustic controller according to an embodiment connected to two acoustic transducers having voice coils.
Figure 7 illustrates a method of determining a time of flight between two acoustic transducers according to an embodiment.

### DESCRIPTION

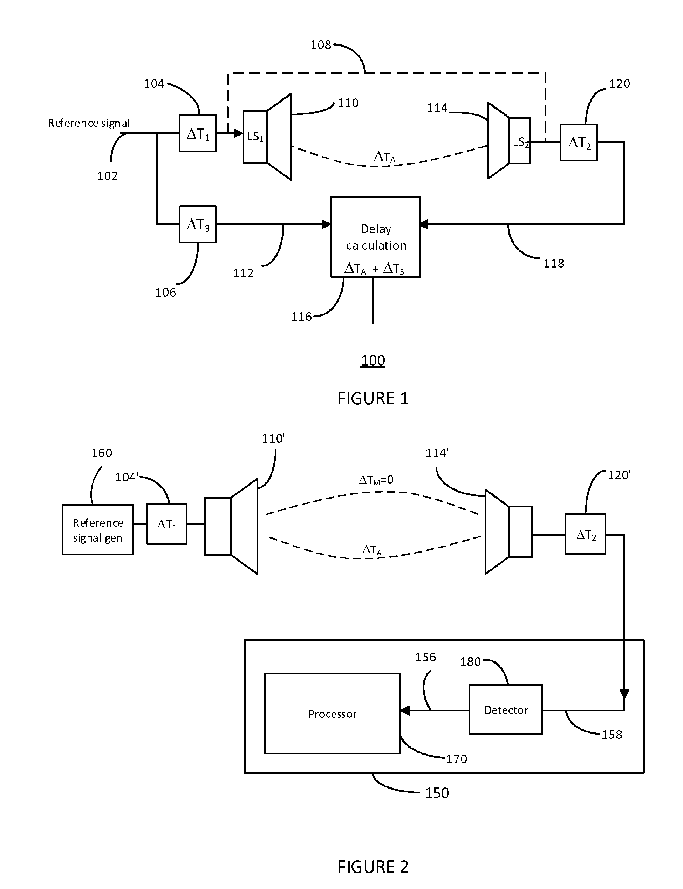

Figure 1 shows a typical apparatus 100 for calculating the distance between two loudspeakers 110,114. An input 102 may be connected to the first loudspeaker 110 via a first delay path 104 having a delay ΔT₁. The second loudspeaker 114 may be connected to a first input 118 of a delay calculator 116 via a second delay path 120 having delay ΔT₂.

The input 102 may be connected to a second input 112 of a delay calculator 116 via a third delay path 106 having a delay ΔT₃.

To determine the distance between the loudspeakers 110,114, a reference signal is played through a first loudspeaker 110 and simultaneously captured by the second loudspeaker 114 which is used as a microphone in this configuration. The acoustical delay ΔT_{A} (and hence the distance) between both loudspeakers can be calculated from the reference signal and the captured signal. However, the measured delay will also include unknown and potentially time-varying delays ΔT₁, ΔT₂, and ΔT₃ which may originate for example from analog to digital and digital to analog conversion delays, operating system delays for an audio system using software, and other circuit delay. The combined effect of all these delays can be denoted as the system delay ΔT_{S}. If both loudspeakers are in the same device, the system delay can be compensated for with a reference measurement where the electrical input of 110 is directly connected to the electrical output of 114 shown as the dotted line 108. Even then, it may require dedicated circuitry to make this possible in existing products. In case the loudspeakers 110,114 are not in the same physical device, such electrical shortcut is not possible and other techniques are required so as to account for the system delay. Such techniques may for instance rely on timestamping with as consequence a higher complexity and an increased dependency on external system components.

Figure 2 shows an acoustic controller 150 according to an embodiment. The acoustic controller 150 includes a processor 170 and a detector 180. The detector 180 may have an output 156 connected to the processor 170 and a detector input 158.

In operation the reference signal generator 160 may be coupled to a first acoustic transducer 110' having a voice coil via a first delay path 104' which may include for example a speaker driver. The detector input 158 may be coupled to a second acoustic transducer 114' having a voice coil via a second delay path 120'. The first and second acoustic transducers 110', 114' may be loudspeakers

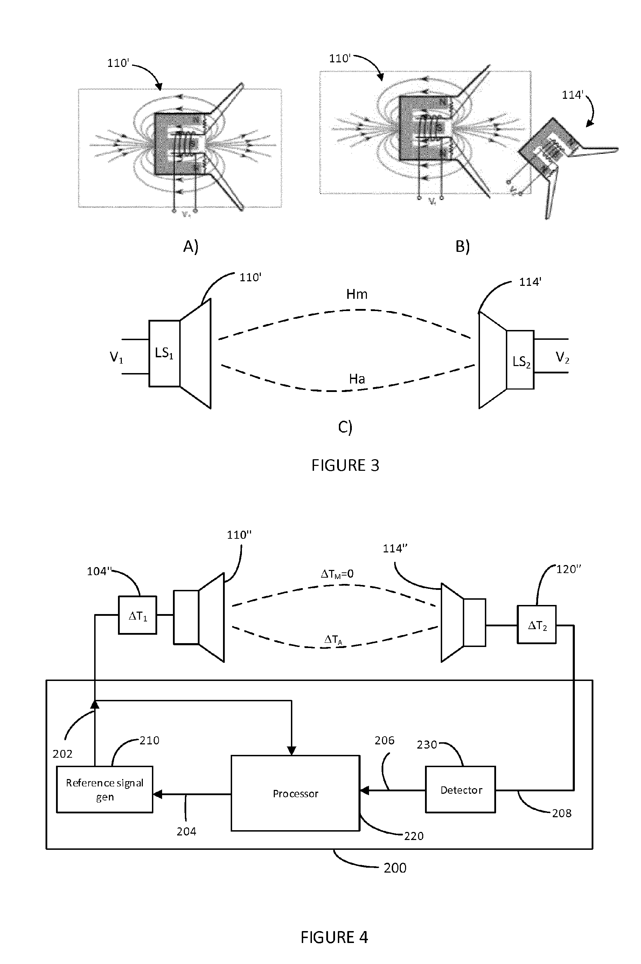

The operation of the acoustic controller 150 may be explained with reference to Figure 3. Figure 3a shows an electrodynamic loudspeaker 110' including a voice coil. When driving the loudspeaker with an AC signal V₁, an AC magnetic field is generated. In case of two nearby loudspeakers 110', 114' shown in figure 3b, the AC magnetic field generated by the first loudspeaker 110' will induce an AC electromotive force (EMF) V₂ in the voice coil of the second loudspeaker 114'. In addition to being magnetically coupled, both loudspeakers 110', 114' are also acoustically coupled. As illustrated in Figure 3c, when driving the first loudspeaker with voltage V₁, the voltage V₂ measured across the second loudspeaker terminals will be the superposition of the magnetic and acoustic coupling. The acoustic coupling transfer function Ha comprises:
- the first loudspeaker transfer function, typically a minimum-phase delay-less function
- the second loudspeaker sensitivity function, typically a minimum-phase delay-less function
- the acoustic transfer function between both loudspeakers. In case of an anechoic free field radiation, it consists only of a pure delay (ΔT_{A}) and a frequency dependent attenuation factor (not shown), from which the speaker-to-speaker distance can be derived.

The skilled person will appreciate that Ha can be estimated using techniques such as for example cross-correlation or adaptive filtering between the reference signal and the detected signal. The larger the measurement bandwidth, the higher the time resolution and the higher the time domain accuracy for time delay estimation.

Since the magnetic coupling transfer function Hm is proportional to the frequency, Hm should preferably be estimated at higher frequencies, typically above 20 kHz. As opposed to the acoustical transfer function, it has no delay and so the effective time of flight of a signal component due to magnetic coupling between the first loudspeaker 110' and the second loudspeaker 114' denoted as ΔT_{M} = 0.

Referring back to figure 2, in operation the reference signal generator 160 may be coupled to a first acoustic transducer 110' and the detector input 158 may be coupled to a second acoustic transducer 114'. First acoustic transducer 110' and second acoustic transducer 114' each include a voice coil and may be positioned such that they are acoustically and magnetically coupled in operation. The processor 170 may receive a detected reference signal from the detector 180 and determine two delay values. The processor 170 may determine a first delay value or magnetic coupling delay value ΔT_{M} from the signal component due to the magnetic coupling between the first acoustic transducer 110' and the second acoustic transducer 114'. The processor 170 may determine a second delay value or acoustic coupling delay value from the signal component due to the acoustic coupling between the first acoustic transducer 110' and the second acoustic transducer 114'.

The measured acoustical delay will be ΔT_{A} + ΔT_{S} while the measured magnetic delay will be ΔT_{M} + ΔT_{S} = ΔT_{S} since ΔT_{M} = 0. The processor 170 may subtract the measured magnetic coupling delay value, corresponding to the system delay, from the measured acoustical coupling delay value to obtain the acoustical delay between the first and second transducers 110', 114' which allows for any system delay ΔT_{S}. Consequently a time-of-flight between the first and second acoustic transducers 110', 114' may be determined. The determined time-of-flight value may compensate for any system delay and so improve the measurement accuracy of acoustic transducer separation. Knowing the distance separating acoustic transducers with a sufficiently high accuracy (typically less than 1cm) may allow an accurate control of the sound field generated by multiple acoustic transducers. The first and second delay values may be determined by comparison with an internal time reference (not shown). Alternatively the magnetic coupling delay value may be considered as time zero or the start time, since the magnetic coupling component may be detected first. In this example, the detection of the magnetic coupling component may be used for example to start a counter or other timer (not shown) which may then be stopped when the acoustic signal component is detected. The value of the timer when stopped may be a value of the time-of-flight of the acoustic signal ΔT_{A}.

Figure 4 shows an acoustic controller 200 according to an embodiment. The acoustic controller 200 includes a reference signal generator 210, a processor 220 and a detector 230. The processor 220 may be connected to an output 202 of the reference signal generator 210. The processor 220 may have a control output 204 connected to an input of the reference signal generator 210. The detector 220 may have an output 206 connected to the processor 220 and a detector input 208.

In operation of the acoustic controller 200, the reference signal generator output 202 may be coupled to a first acoustic transducer 110" having a voice coil via a first delay path 104" which may include for example a speaker driver. The detector input 208 may be coupled to a second acoustic transducer 114" having a voice coil via a second delay path 120". The first and second acoustic transducers 110", 114" may be loudspeakers. The processor 220 may enable the reference signal generator 210 at a first time value. The reference signal generator 210 may generate a signal which is transmitted via first acoustic transducer 110". A magnetic coupling signal component of the generated signal may be detected via the second transducer 114" at a second time value. An acoustic coupling signal component of the generated signal may be detected via the second transducer 114" at a third time value. The processor 220 may determine a magnetic coupling delay value from the difference between the second time value and the first time value. The processor 220 may determine an acoustic coupling delay value from the difference between the third time value and the first time value. Since the time of flight of the magnetic coupling ΔTm = 0, the processor may determine a time of flight value from the acoustic signal from the difference between the acoustic coupling delay value and the magnetic coupling delay value.

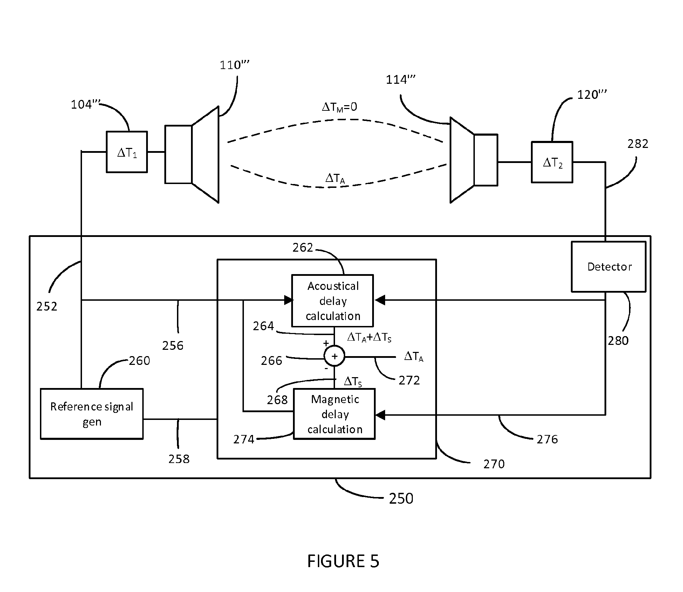

Figure 5 shows an acoustic controller 250 according to an embodiment. The acoustic controller 250 includes a reference signal generator 260, a processor 270 and a detector 280.

The processor 270 includes an acoustic delay calculator 262, a magnetic delay calculator 274 and a comparator 266.

A processor input 256 may be connected to the acoustic delay calculator 262 and the magnetic delay calculator 274. The processor input 256 may be connected to an output 252 of the reference signal generator 260 via a delay 254. The delay 254 may represent a part of a system delay due to signal conversion, transmission delay, or processing delay. The processor 270 may have a control output 258 connected to an input of the reference signal generator 260. The acoustic delay calculator 262 may have an output 264 connected to a first input of the comparator 266. The magnetic delay calculator may have an output 268 connected to a second input of the comparator 266. The comparator 266 may generate a difference between the two input values on a comparator output 272. The detector 280 may have an output 276 connected to the acoustic delay calculator 262 and the magnetic delay calculator 274. The detector 280 may have a detector input 282.

In operation of the acoustic controller 250, the reference signal generator output 252 may be coupled to a first acoustic transducer 110"' having a voice coil via a first delay path 104"'. The first delay path 104'" may include for example a speaker driver. The detector input 282 may be coupled to a second acoustic transducer 114'" having a voice coil via a second delay path 120"'. The first and second acoustic transducers 110"', 114'" may be loudspeakers. In other examples the first acoustic transducer 110'" may be a loudspeaker and the second acoustic transducer 114'" may be a microphone. In other examples, the first acoustic transducer 110" and/or the second acoustic transducer 114" may be a linear resonant actuator.

The processor 270 may receive a detected signal from the detector 280 and determine two delay values. The magnetic delay calculator 274 may determine a first delay value or magnetic coupling delay value from the signal component due to the magnetic coupling between the first acoustic transducer 110" and the second acoustic transducer 114" for example by correlating the reference signal with the detected signal. The acoustic delay calculator 262 may determine a second delay value or acoustic coupling delay value from the signal component due to the acoustic coupling between the first acoustic transducer 110'" and the second acoustic transducer 114'" The comparator 266 may determine the difference between the acoustic coupling delay value and the magnetic coupling delay value. The measured acoustical delay will be ΔT_{A} + ΔT_{S} while the measured magnetic delay will be ΔT_{M} + ΔT_{S} = ΔT_{S} since ΔT_{M} = 0. The resulting difference will therefore compensate the measurement of the acoustic delay for the effect of any system delay ΔT_{S} which may be due to a combination of any of the delays 104"', 120"' or other delays not shown.

The reference signal generator 260 may be implemented by hardware or a combination of hardware and software. For example, the processor 270 may be implemented by hardware as digital logic or by software running on a microprocessor or digital signal processor or a combination of both hardware and software. The detector 280 may be implemented as hardware. The detector 280 may include an analog to digital converter.

In other embodiments, the acoustic delay calculator 262 may store a magnetic delay value in a memory (not shown). The acoustic delay calculator 262 may then provide the stored magnetic delay value as a measure of the system delay if a magnetic coupling delay value cannot be determined from the detected signal. Storing a magnetic coupling delay value which may correspond to the system delay, may allow more accurate time of flight measurements to be made when the acoustic transducers are placed further apart, for example at a distance where there is no detectable magnetic coupling between the transducers.

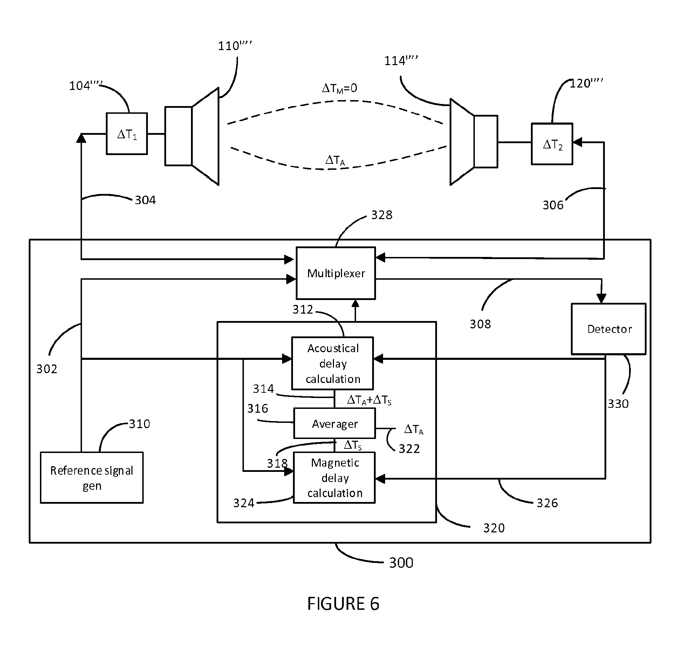

Figure 6 shows an acoustic controller 300 according to an embodiment. The acoustic controller 300 includes a reference signal generator 310, a processor 320, a detector 330, and a multiplexer 328. The processor 320 includes an acoustic delay calculator 312, a magnetic delay calculator 324 and an averager module 316. The processor 320 may have a control output connected to the multiplexer 328.

The acoustic delay calculator 312 may have an input connected to an output 302 of the reference signal generator 310. The magnetic delay calculator 324 may have an input connected to the output 302 of the reference signal generator 310. The output 302 of the reference signal generator 310 may be connected to the multiplexer 328.

The acoustic delay calculator 312 may have an output 314 connected to a first input of the averager module 316. The magnetic delay calculator 324 may have an output 318 connected to a second input of the averager module 316. The detector 330 may have an input connected to the multiplexer 328. The detector 330 may have an output 326 connected to the acoustic delay calculator 312 and the magnetic delay calculator 324.

In operation of the acoustic controller 300, the multiplexer 328 may have a first bidirectional connection 304 coupled to a first acoustic transducer 110"" via a first delay path 104"". The multiplexer 328 may have a second bidirectional connection 306 coupled to the second acoustic transducer 114"" via a second delay path 120"". The first and second acoustic transducers 110"", 114"" may be loudspeakers. In other examples the first acoustic transducer 110"" may be a loudspeaker and the second acoustic transducer 114"" may be a microphone. The first acoustic transducer 110"" and the second acoustic transducer 114"" have a voice coil. In other examples, the first acoustic transducer 110" may be a linear resonant actuator (LRA) and the second acoustic transducer 114"" may be either a microphone or a linear resonant actuator configured as an input sensor.

In operation the processor 320 may control the multiplexer 328 in a first mode to couple the reference signal generator output 302 to the first bidirectional connection 304 and the detector input 308 to the second bidirectional connection 306. The processor 320 may control the multiplexer 328 in a second mode to couple the reference signal generator output 302 to the second bidirectional connection 306 and the detector input 308 to the first bidirectional connection 304. The multiplexer 328 may be implemented in hardware or software. As will be appreciated in other examples, other circuits or software that route the signal generator output and detector input to different bidirectional connections may also be used.

The acoustic controller 300 may measure the magnetic and acoustic delays in the first mode by transmitting a reference signal via the first acoustic transducer 110"" and detecting the transmitted reference signal via the second acoustic transducer 114"" as previously described for acoustic controller 250. The acoustic controller 300 may measure the magnetic and acoustic delays in the second mode by transmitting a reference signal via the second acoustic transducer 114"" and detecting the transmitted reference signal via the first acoustic transducer 110"" similarly as previously described for acoustic controller 250. The averager module 316 may determine a difference between the acoustic delay value and the magnetic delay value in each mode. The averager module 316 may determine an average compensated acoustic delay value from the measurement taken in each direction and output an average value of the acoustic time of flight on the averager output 322. The processor 320 may determine a time of flight value from the average compensated acoustic delay value. By measuring the acoustic delay between the first and second acoustic transducer in both directions the accuracy of the measurement may be further improved. As will be appreciated, the acoustic controller 350 may make multiple measurements in one or both directions to further improve the accuracy.

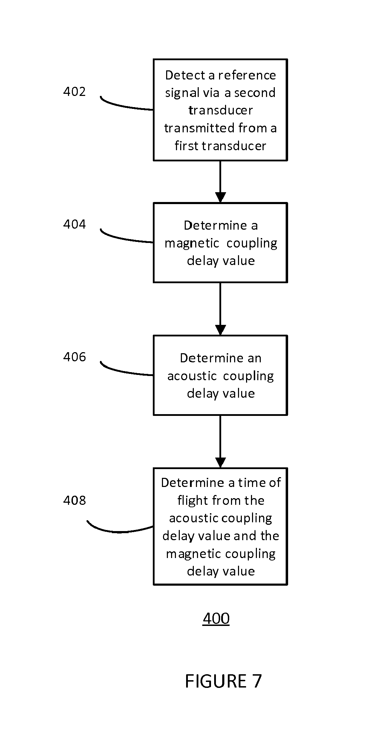

Figure 7 shows a method for determining a time of flight of an acoustic signal 400. In step 402 the reference signal may be detected via a second transducer having a voice coil which is transmitted from a first transducer having a voice coil. The reference signal may have a frequency in the acoustic range which may include infra-sound, audible, or ultrasound signals. The first transducer and the second transducer may be positioned such that they are both magnetically and acoustically coupled. In step 404 a magnetic coupling delay value may be determined. The magnetic coupling delay value may be determined from the time difference between transmitting the reference signal and detecting the magnetic coupling component of the detected reference signal. Alternatively the magnetic coupling delay value may be a start time signal and so may have a value of zero. In step 406 an acoustic coupling delay value may be determined. The acoustic coupling delay value may be determined from the time difference between transmitting the reference signal and detecting the acoustic coupling component of the detected reference signal. In other examples, the acoustic coupling delay value may be determined directly from the time difference between detecting the magnetic coupling signal component and detecting the acoustic coupling signal component. In step 408 the time of flight of the acoustic signal may be determined from the acoustic coupling delay value and the magnetic coupling delay value. Since the magnetic coupling delay value has no time delay between the first acoustic transducer and the second acoustic transducer, it may represent the value of the system delay which can then be used to compensate for the measured acoustic coupling delay value. Consequently a more accurate time of flight of the acoustic signal between the first transducer and the second transducer may be determined. The method 400 may be implemented in hardware, software running on a microprocessor or a combination of hardware and software.

An acoustic controller is described including a detector configured to detect a received reference signal on the terminals of a second acoustic transducer transmitted by a first acoustic transducer, the first and second acoustic transducers having a voice coil; and a processor coupled to the signal generator and the detector, wherein the processor is configured to determine a magnetic-coupling-delay value from the detected reference signal, determine an acoustic-coupling-delay value from the detected reference signal; and determine a time-of-flight value of an acoustic signal transmitted between the first acoustic transducer and the second acoustic transducer from the acoustic-coupling-delay value and the magnetic-coupling-delay value.

The acoustic controller may be included in mobile devices, for example smartphones, hearable devices for example hearing aids, laptops and tablet computers, personal digital assistants, and wearable devices

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. An acoustic controller comprising:
a detector configured to detect a received reference signal on the terminals of a second acoustic transducer transmitted by a first acoustic transducer, the first and second acoustic transducers having a voice coil;
a processor coupled to the signal generator and the detector; wherein the processor is configured to
determine a magnetic-coupling-delay value from the detected reference signal,
determine an acoustic-coupling-delay value from the detected reference signal, and
determine a time-of-flight value of an acoustic signal transmitted between the first acoustic transducer and the second acoustic transducer from the acoustic-coupling-delay value and the magnetic-coupling-delay value.

2. The acoustic controller of claim 1 further comprising a reference signal generator coupled to the processor and wherein the processor is further configured to compare the detected signal with the generated reference signal.

3. The acoustic controller of any preceding claim wherein the detector is configured to detect a magnetic coupling signal component of the detected reference signal due to the magnetic coupling between the first acoustic transducer and the second acoustic transducer, and the processor is configured to determine a magnetic-coupling-delay value from the magnetic coupling signal component.

4. The acoustic controller of any preceding claim wherein the detector is configured to detect an acoustic coupling signal component of the detected reference signal due to the acoustic coupling between the first acoustic transducer and the second acoustic transducer and the processor is further configured to determine the acoustic-coupling-delay value from the acoustic coupling signal component.

5. The acoustic controller of any preceding claim wherein the processor is further configured to determine the time-of-flight value from the difference between the acoustic coupling delay value and the magnetic coupling delay value.

6. The acoustic controller of any of claims 2 to 4 wherein the signal generator is further configured to generate a further signal for transmission by the second acoustic transducer, the detector is further configured to detect a further signal on the terminals of the first acoustic transducer transmitted by the second acoustic transducer and wherein the processor is further configured to:
determine a further magnetic-coupling-delay value dependent on the detected signal;
determine a further acoustic-coupling-delay value dependent on the detected signal; and
determine the time-of-flight value of an acoustic signal transmitted between the second acoustic transducer and the first acoustic transducer from the acoustic-coupling-delay value, the further acoustic-coupling-delay value, the magnetic-coupling-delay value and the further magnetic-coupling-delay value.

7. The acoustic controller of claim 6 wherein the processor is configured to determine the time-of-flight value from the difference between the average of the acoustic-coupling-delay value and the further acoustic-coupling-delay value and the average of the magnetic-coupling-delay value and the further magnetic-coupling-delay value.

8. The acoustic controller of any preceding claim further comprising a memory coupled to the processor, wherein the memory is configured to store the determined magnetic coupling delay value and the processor is further configured to determine further time-of-flight values from the acoustic coupling delay value and the stored magnetic coupling delay value.

9. An audio system comprising the acoustic controller of any preceding claim coupled to the first and second acoustic transducers wherein the first and second acoustic transducers comprise one of a loudspeaker and electrodynamic microphone and a linear resonant actuator.

10. A method for determining a distance between two acoustic transducers, each of the acoustic transducers comprising a voice coil, the method comprising:
detecting a reference signal via a second acoustic transducer, transmitted from the first transducer,
determining a magnetic coupling delay value dependent on the detected signal and the generated signal,
determining an acoustic coupling delay value dependent on the detected signal and the generated signal; and
determining a time-of-flight value of an acoustic signal transmitted between the first acoustic transducer and the second acoustic transducer from the acoustic coupling delay value and the magnetic coupling delay value.

11. The method of claim 10 wherein determining a distance between the first acoustic transducer and the second acoustic transducer further comprises determining the difference between the acoustic coupling delay value and the magnetic coupling delay value.

12. The method of any of claims 10 to 11 wherein determining the magnetic coupling delay value further comprises detecting a magnetic-coupling-signal component of the signal due to the magnetic coupling between the first acoustic transducer and the second acoustic transducer.

13. The method of any of claims 10 to 12 wherein determining the acoustic coupling delay value further comprises detecting an acoustic-coupling-signal component of the signal due to the acoustic coupling between the first acoustic transducer and the second acoustic transducer.

14. The method of any of claims 10 to 13 further comprising
generating a further signal,
transmitting the further signal via the second acoustic transducer,
detecting the further transmitted signal via the first acoustic transducer,
determining a further magnetic coupling delay value dependent on the further detected signal and the further generated signal,
determining a further acoustic coupling delay value dependent on the detected signal and the generated signal; and
determining a time-of-flight value of an acoustic signal transmitted between the second acoustic transducer and the first acoustic transducer from the acoustic coupling delay value, the further acoustic coupling delay value, the magnetic coupling delay value, and the further magnetic coupling delay value.

15. The method of any of claims 10 to 14 further comprising:
arranging the first acoustic transducer and the second acoustic transducer at a first distance such that the first acoustic transducer and the second acoustic transducer are at least magnetically coupled in operation,
determining the magnetic coupling delay value,
arranging the first acoustic transducer and the second acoustic transducer at a second distance such that the speaker and the second speaker are at least acoustically coupled in operation,
determining the acoustic coupling delay value,
wherein determining the distance comprises determining the second distance from the acoustic coupling delay value and the magnetic coupling delay value.
